(19) **Europäisches Patentamt**

**European Patent Office**

**Office européen des brevets**

(11) **EP 1 659 737 A2**

(12) **EUROPEAN PATENT APPLICATION**

(43) Date of publication:
24.05.2006 Bulletin 2006/21

(51) Int Cl.:
*H04L 12/28* (2006.01)

(21) Application number: 05025542.1

(22) Date of filing: 23.11.2005

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **23.11.2004 KR 2004096610**

(71) Applicant: **Samsung Electronics Co., Ltd.**
**Suwon-si, Gyeonggi-Do (KR)**

(72) Inventors:
• **Uh, Rae-Jin**
**Seoul (KR)**

• **Na, Sung-Guk**
**Suwon-si**
**Gyeonggi-do (KR)**
• **Hwang, Hyo-Sun**
**Yeongtong-gu**
**Suwon-si**
**Gyeonggi-doSeoul (KR)**
• **Choe, Mi-Ra**
**Yeongtong-gu**
**Suwon-si**
**Gyeonggi-do (KR)**

(74) Representative: **Lang, Johannes**
**Paten-und Rechtsanwälte,**
**Bardehle Pagenberg Dost Altenberg Geissler**
**Galileiplatz 1**
**81679 München (DE)**

(54) **METHOD FOR PROCESSING PACKETS AND SCHEDULING SUPERFRAMES IN A WIRELESS LAN**

(57) A method for processing packets in a polling-based WLAN system comprises: scheduling a superframe to include a first period in which only a terminal receiving a polling message from an access point (AP) is allowed to access a medium without contention, the AP transmitting the polling message to arbitrary terminals, and a second period in which a terminal is allowed to access the medium with contention; firstly transmitting, by means of the AP, during a first sub-period in the first period of the superframe, packets stored in a queue of the AP to the arbitrary terminals; and secondly transmitting, during a second sub-period of the first period, packets that are not transmitted in time during the first sub-period in the first period but are accumulated in the queue. Thus, it is possible to supplement packets that are received from an Ethernet, which is unable to guarantee QoS, through proper scheduling upon communication with another subnet and to recognize information about abnormally operating terminals, so as to guarantee overall QoS.

FIG. 1

Description

**BACKGROUND OF THE INVENTION**

**Field of the Invention**

The present invention relates to a method for processing packets and a method for scheduling a superframe in a polling-based wireless local area network (WLAN) system and, more particularly, to a technique for scheduling or filtering non-predictable or abnormal packets that will be sent to terminals desiring quality of service (QoS) guarantee in a WLAN system that uses a polling-based QoS guarantee algorithm.

**Description of the Related Art**

The WLAN is a communication network over which users are able to wirelessly transmit and receive data. Users of the WLAN are increasing every year because of its mobility and simple installation. Existing information that is transmittable and receivable over the WLAN largely includes, for example, document information and information needed to use Internet.

Recently, however, research is actively being performed in order to accommodate voice call service, multiple conference service, real-time image transmission service, and the like, which require real time. In recent years, WLAN telephones which are capable of making a call through connection to the WLAN are also being commonly used.

In order to smoothly provide a variety of application services requiring real time, the WLAN should be able to guarantee quality of service (QoS) to terminals/users that use such services. The WLAN should also have the capability of providing optimal service to different terminals connected to the WLAN since the respective terminals desire different levels of service. WLAN standards that are widely being used in recent years define functions capable of allowing for QoS and class of service (CoS), or include a procedure for supplementing associated functions. The WLAN standard in the IEEE, which is being applied widely (including in North America, Korea, *etc.*), is also optionally supporting a point coordination function (PCF), which is a polling-based medium access control function to allow real-time information delivery.

The WLAN standard in IEEE conforms to "Standard for Information Technology-Telecommunications and Information Exchange between Systems-Local and Metropolitan Area Networks-Specific Requirements-Part 11: Wireless LAN Medium Access Control (MAC) and Physical Layer (PHY) Specifications", 1999 Edition.

This standard is hereinafter abbreviated to IEEE 802.11. The IEEE 802.11 standard defines a physical layer and medium access control (MAC) that make up the WLAN.

The MAC layer defines orders and rules to which terminals or devices using a shared medium should conform when using/accessing the medium to efficiently use the capacity of the medium. The IEEE 802.11 defines two access mechanisms, such as a distributed coordination function (DCF) and a point coordination function (PCF).

The DCF is an access control mechanism which is defined as a basic component of the IEEE 802.11 standard, and uses a contention-based algorithm that is known as carrier sense multiple access/collision avoidance (CSMA/CA).

In a CSMA/CA-based WLAN system, a terminal checks whether the medium is busy. If the medium is busy, the terminal waits for a certain time until the medium is idle, and then reduces a back-off time. Such a certain period of time for which each terminal waits to initiate traffic is referred to as an interframe space (IFS). The MAC protocol traffic largely includes three IFSs: DIFS indicating a DCF interframe space, PIFS indicating a PCF interframe space, and SIFS indicating a short interframe space.

A terminal using the DCF mechanism first checks whether a medium is busy before sending a frame. If the medium is kept idle during a period of time larger than or equal to the DCF interframe space (DIFS), the terminal is allowed to transmit the frame.

On the contrary, if the medium is busy, the terminal initiates a back-off procedure. When a value of the back-off timer reaches zero, the terminal occupies the medium to thereby transmit the frame.

In the back-off procedure, the back-off timer is assigned with a random back-off time. The back-off time follows the following equation:

$$\text{Back-off Time} = \text{random()} * \text{slottime}$$

where, random() indicates a random integer having a uniform probability distribution in a [0, CW] period, CW indicates a contention window, and CWmin <= CW <= CWmax.

The back-off timer is decremented by the slottime each time the medium is kept idle for the slottime, and stops decrementing when the medium becomes busy at any instant.

The back-off timer may be again decremented by the slottime after the medium becomes idle during the DIFS. At this time, the back-off time is set to a value that is not produced, but is randomly selected in a set range of the back-off time.

In addition, the back-off time set for an arbitrary terminal will be decremented by the slottime when the medium is idle. That is, when re-contention for transmission is to be performed due to failure in previous transmission contention, the back-off time will be decremented by the slottime from a decremented value in the previous contention process. This allows the terminal to transmit the frame when the back-off timer reaches zero.

At this time, each time a collision occurs as a number of terminals simultaneously attempt to transmit, the contention window (CW) exponentially increases. In addition, the back-off timer will have a new back-off time.

Meanwhile, the CW returns to a minimum CW (CWmin) after a successful transmission. The exponential increase of the CW serves to lower a recollision probability, enhancing stability of a network.

The DCF in the IEEE 802.11 is a medium access mechanism capable of giving a fair chance to all terminals when the terminals attempt to access the medium, but is not usable in building a WLAN system that supports the QoS.

The access control mechanism designed for guaranteeing the QoS in the WLAN includes a contention-free method and a contention-based method. The polling-based mechanism is a representative contention-free medium access method. The PCF uses this mechanism.

The PCF is a centralized and polling-based access control algorithm, and needs a device called a point coordinator (PC) in the AP. The point coordinator sends a frame called a CF-Poll in order to give a transmission chance to a specific terminal. Upon using the PCF, a contention-free period (CFP) in which only a terminal receiving a poll has a transmission chance without contention, and a contention period (CP) in which a terminal is allowed to access the medium with contention, are alternately iterated.

In order to use the PCF, the point coordinator should have a scheduler function. This is because the point coordinator should predict information about, for example, transmission time and the size of the frame of all terminals desiring to send real-time data and properly make a schedule at each cycle to give a transmission chance to the terminal. An improper schedule may make a terminal incur an access delay exceeding a limited time, and may degrade transmission efficiency of the medium.

One of the methods giving priority to each terminal upon the terminal's transmission contention in the contention-based WLAN system is to apply different CWs, which determine the DIFS and the backoff time, based on the priority upon using the CSMA/CA algorithm.

The smaller the DIFS and the CW value, the higher priority the respective data traffic or terminals have.

Korean Patent No. 10-0442821, issued on July 23, 2004 and entitled *"Data Communication Method Based on Backoff Number Control"* (hereinafter, referred to as "prior patent"), introduces a technique for a multiple-polling DCF mechanism for solving a disadvantage of the PCF using a basic function of distributed coordination function (DCF).

In the multiple-polling DCF mechanism introduced in the prior patent, when an AP transmits a multiple-polling message that contains IDs of terminals that the AP desires to poll and information about an arbitrary back-off number assigned to each terminal, a relevant terminal receives the multiple-polling message, sets the back-off number assigned to the terminal in a back-off timer of the terminal, and then performs a back-off procedure to attempt to access the medium.

Thus, the multiple-polling DCF mechanism defines the back-off number of a number of terminals (hereinafter, referred to as MP-DCF terminals) in one polling message, i.e., a Multi-Poll or beacon, and sends the polling message to the relevant terminals requiring the QoS, thus giving a fair transmission chance to the respective MP-DCF terminals.

However, there is a problem associated with packet processing in the PCF or MPDCF, which is the polling-based medium access control mechanism for guaranteeing the QoS as described above. That is, in the PCF mechanism, if there are an excessively great number of packets to be sent from the AP to one terminal in one service period, packets are accumulated.

In addition, in order to guarantee optimal quality of service in the MPDCF mechanism, it is required that the size of the superframe be smaller than or equal to a service packet period in which the QoS is desired, and that the maximum amount of packets transmittable in the superframe be restricted.

However, although it is possible to predict wireless packets transmitted from each terminal to the AP, it is difficult to predict packets transmitted from the AP to the terminal due to several factors.

For example, when a great number of packets are buffered from an Ethernet network or a burst packet is incoming over a network, the packets that are not transmitted in time are accumulated in the queue of the AP if the AP does not transmit all of the packets to a relevant terminal in a prescribed period of time.

There is a high possibility that data packets in the queue of the AP that are not transmitted for a long time will become useless due to aging. This phenomenon becomes more severe as traffic in the system increases.

**SUMMARY OF THE INVENTION**

The present invention has been developed to solve the aforementioned problem. It is an object of the present invention to provide a method for processing packets and scheduling a superframe in a polling-based WLAN system, in which method scheduling or filtering is performed on non-predicable or abnormal packets sent to terminals desiring QoS guarantee in a WLAN system that uses a polling-based QoS guarantee algorithm.

According to an aspect of the present invention, there is provided a method for processing packets in a polling-based wireless local area network (WLAN) system, the method including: scheduling a superframe to include a first period in which only a terminal receiving a polling message from an access point (AP) is allowed to access a medium without contention, the AP transmitting the polling message to arbitrary terminals, and a second period in which a terminal is allowed to access the medium with contention; transmitting, by the AP, packets stored in a queue of the AP to the arbitrary terminals during a first sub-period in the first period of the superframe; and transmitting packets which are not transmitted in time during the first sub-period in the first period, but which are accumulated in the queue, during a second sub-period of the first period.

The method may further include storing a history of the packets accumulated in the queue of the AP, and performing packet filtering using the history.

The packet filtering may include sending a disassociation request frame to the relevant terminal when the number of the accumulated packets that are not sent in the relevant period during a set period of time is larger than the set period of time, or referring to a destination address of a medium access control (MAC) header of the accumulated packets in the queue to discard the packets that will be sent to the relevant terminal.

According to another aspect of the present invention, there is provided a method for scheduling a superframe in a polling-based WLAN system, wherein the superframe includes a first period in which only a terminal receiving a polling message from an access point (AP) is allowed to access a medium without contention, the AP transmitting the polling message to arbitrary terminals, and a second period in which a terminal is allowed to access the medium with contention, and the superframe is scheduled such that, in the first period of the superframe, the AP firstly transmits packets stored in a queue of the AP to the arbitrary terminals and secondly transmits packets that are not transmitted in time but are accumulated in the queue.

According to yet another aspect of the present invention, there is provided a method for processing packets in a polling-based wireless local area network (WLAN) system, including: scheduling a superframe to include a first period in which only a terminal receiving a polling message from an access point (AP) is allowed to access a medium without contention, the AP transmitting the polling message to arbitrary terminals, and a second period in which a terminal is allowed to access the medium with contention; transmitting, by the AP, packets stored in a queue of the AP to the arbitrary terminals during the first period of the superframe; and transmitting packets that are not transmitted in time during the first period, but are accumulated in the queue, during the second period.

According to yet another aspect of the present invention, there is provided a method for scheduling a superframe in a polling-based WLAN system, wherein the superframe includes a first period in which only a terminal receiving a polling message from an access point (AP) is allowed to access a medium without contention, the AP transmitting the polling message to arbitrary terminals, and a second period in which a terminal is allowed to access the medium with contention, and the superframe is scheduled such that, in the first period of the superframe, the AP firstly transmits packets stored in a queue of the AP to the arbitrary terminals and, in the second period of the superframe, the AP secondly transmits packets that are not transmitted in time during the first period but are accumulated in the queue.

According to yet another aspect of the present invention, there is provided a method for processing packets in a polling-based wireless local area network (WLAN) system, including: scheduling a superframe to include a first period in which only a terminal receiving a polling message from an access point (AP) is allowed to access a medium without contention, the AP transmitting the polling message to arbitrary terminals, and a second period in which a terminal is allowed to access the medium with contention; transmitting, by the AP, packets stored in a queue of the AP to the arbitrary terminals during a first sub-period in the first period of the superframe; and transmitting packets that are not transmitted during the first sub-period in the first period, but are accumulated in the queue, during a second sub-period of the second period.

According to yet another aspect of the present invention, there is provided a method for scheduling a superframe in a polling-based WLAN system, wherein the superframe includes a first period in which only a terminal receiving a polling message from an access point (AP) is allowed to access a medium without contention, the AP transmitting the polling message to arbitrary terminals, and a second period in which a terminal is allowed to access the medium with contention, and the superframe is scheduled such that, in the first period of the superframe, after a mode where packets are transmitted from the arbitrary terminals to the AP is performed, a maximum time in which packets stored in a queue of the AP are transmittable to a relevant terminal is calculated, the number of packets transmittable in the maximum time in which the packets are transmittable to the relevant terminal is calculated, the calculated number of packets are transmitted during the first period, and transmission of packets that is not transmitted in time is deferred to a next superframe.

## BRIEF DESCRIPTION OF THE DRAWINGS

A more complete appreciation of the invention, and many of the attendant advantages thereof, will be readily apparent as the same becomes better understood by reference to the following detailed description when considered in conjunction with the accompanying drawings, in which like reference symbols indicate the same or similar components, wherein:

FIG. 1 illustrates a superframe scheduled in a PCF mechanism according to an embodiment of the present invention;

FIG. 2 is a flow diagram illustrating a method for scheduling in the PCF mechanism shown in FIG. 1;

FIG. 3 illustrates a superframe scheduled in a PCF mechanism according to another embodiment of the present invention;

FIG. 4 is a flow diagram illustrating a method for scheduling in the PCF mechanism shown in FIG. 3;

FIG. 5 illustrates a superframe scheduled in an MPDCF mechanism according to yet another embodiment of the present invention; and

FIG. 6 is a flow diagram illustrating a method for scheduling in the MPDCF mechanism shown in FIG. 5.

## DETAILED DESCRIPTION OF THE PREFERRED EMBODIMENTS

The present invention will now be described more fully hereinafter with reference to the accompanying drawings, in which preferred embodiments of the invention are shown. This invention may, however, be embodied in different forms and should not be construed as limited to the embodiments set forth herein. Rather, these embodiments are provided so that this disclosure will be thorough and complete, and fully convey the scope of the invention to those skilled in the art. Like numbers refers to like elements throughout the specification.

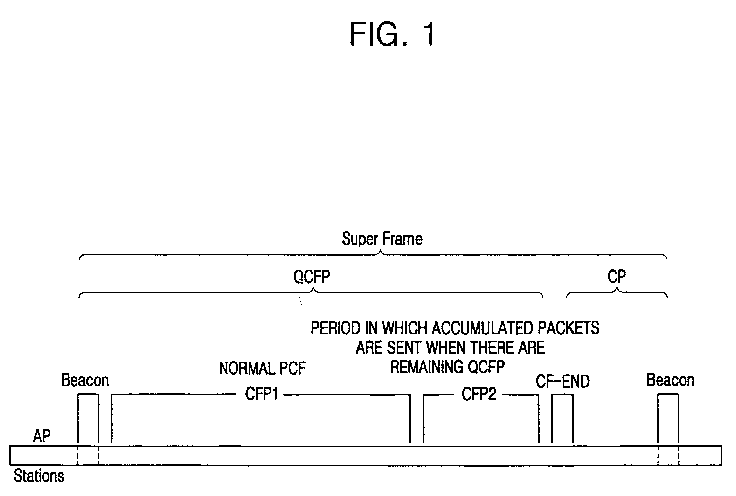

FIG. 1 illustrates a superframe scheduled in a point coordination function (PCF) mechanism according to an embodiment of the present invention.

Referring to FIG. 1, the superframe scheduled according to an embodiment of the present invention includes a first period in which only a terminal receiving a poll from an access point (AP) is allowed to access a medium without contention, the AP providing the poll to arbitrary terminals, and a second period in which a terminal is allowed to access the medium with contention.

The superframe is scheduled such that, in the first period of the superframe, the AP firstly transmits packets stored in a queue of the AP to the arbitrary terminals, and secondly transmits packets that are not transmitted in time and are accumulated in the queue. At this time, the superframe has a frame period from one beacon to a next beacon.

For convenience, hereinafter, the first period is called a QoS contention-free period (QCFP) and the second period is called a contention period (CP).

The QCFP indicating the first period is a name obtained by combining Q indicating the QoS guarantee and CFP indicating the CFP period in the superframe except for the CP period.

Thus, the QCFP period is a period from a point in time at which one beacon signal is generated to a point in time at which a contention-free end signal (CF-END) is generated. The CP period is a period from the point in time at which the contention-free end signal (CF-END) is generated to a point in time at which a next beacon signal is generated.

The QCFP is composed of a first CFP and a second CFP. The first CFP (CFP1) is a CFP period in which packets stored in the queue of the AP are transmitted to a relevant terminal without contention. The second CFP (CFP2) is a CFP period in the overall QCFP, except for the first CFP period, and defines a CFP period in which packets accumulated in the queue of the AP are transmitted to the relevant terminal without contention.

That is, the superframe is scheduled such that, during the first CFP (CFP1), the packets stored in the queue, which is assigned to each terminal, are transmitted to the relevant terminal in a VoDn mode and, during the second CFP (CFP2), the accumulated packets in the queue assigned to arbitrary terminal are transmitted to the relevant terminal when there are the accumulated packets in the queue during a certain time.

Thus, the scheduling of one superframe is made so that, in the first CFP (CFP1), the packets are sequentially transmitted without contention to terminals the AP desires to poll and, in the second CFP (CFP2) in the overall QCFP period except for the first CFP (CFP1), the accumulated packets in the queue of the AP that are not transmitted in time to the relevant terminals in the first CFP (CFP1) are transmitted. At this time, the second CFP (CFP2) is a period which is not fixed to a certain value, but which varies with the first CFP (CFP1). That is, the overall QCFP period is fixed to a certain value while the second CFP (CFP2) is obtained by subtracting the first CFP (CFP1) from the fixed QCFP period.

In other words, the first CFP (CFP1) is a period in the CFP of the superframe in which the AP transmits a polling message to each terminal and the terminal receiving the polling message transmits data to the AP, completing one polling period, and the second CFP (CFP2) is a period in the QCFP period of the superframe, except for the first CFP (CFP1).

Thus, in order to schedule one superframe, it is necessary to calculate the second CFP (CFP2) by subtracting the first CFP (CFP1) from the QCFP when the first CFP (CFP1) in the superframe is ended and to calculate the number of packets that are transmittable during the second CFP (CFP2).

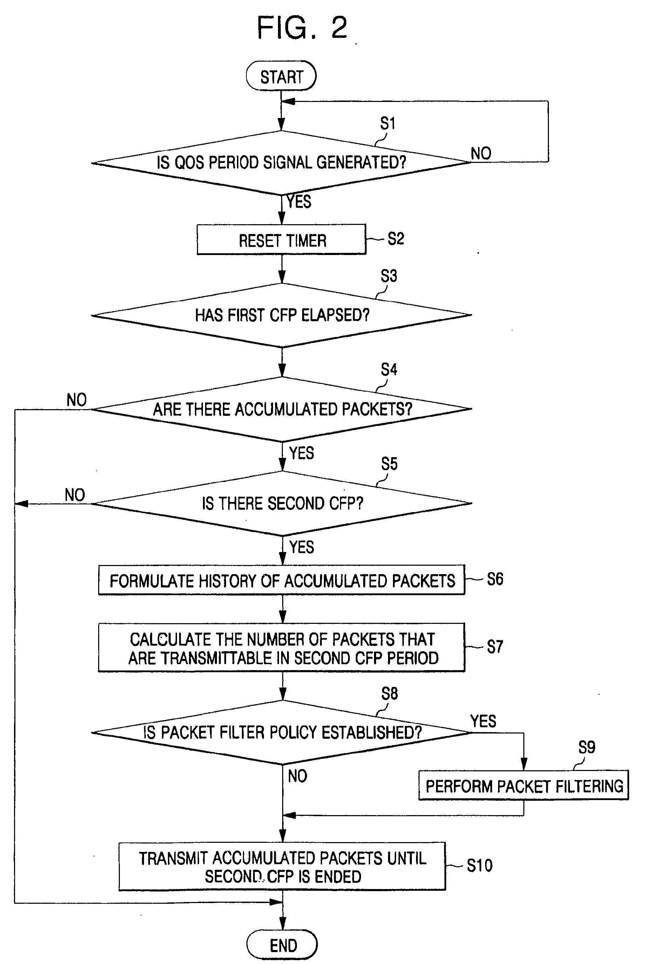

FIG. 2 is a flow diagram illustrating a method for scheduling in the PCF mechanism shown in FIG. 1.

The AP generates a beacon signal in each beacon period, and transmits the generated beacon signal to respective terminals in the WLAN area of the AP. Accordingly, the task of scheduling the superframe in the AP begins with checking a point in time at which the beacon signal is generated. At this time, the beacon signal is called a QoS period signal since the beacon signal indicates a period signal needed to perform the QoS service.

Referring to FIG. 2, first, the AP determines whether the QoS period signal (i.e., beacon) is generated (S1). When it is determined that the QoS period signal (i.e., beacon) is generated, the AP resets a timer to begin a count (S2). Periodic generation of the beacon signal in the AP is realized by a counter embedded in the AP, the counter counting the period of the beacon signal. For this reason, the timer mentioned herein is a timer counting the period of the beacon signal.

After the timer begins to count, the AP reads a count value of the timer to determine whether the first CFP period has elapsed (S3).

When it is determined, based on the count value of the timer, that the first CFP period has not elapsed, the AP may determine that the first CFP period is in progress. In the VoDn mode during the first CFP period, the AP transmits the packets stored in each queue, which is assigned to terminals that the AP desires to poll. It is normal that, in the VoDn mode during the first CFP period, all of the packets in the queue assigned to the relevant terminal are transmitted. However, if the packets stored in arbitrary queue are more than can be transmitted to the relevant terminal, all of the packets, which are stored in the queue in the VoDn mode during the first CFP period, may not be transmitted to the relevant terminal, but may be accumulated instead.

Accordingly, when it is determined, based on the count value of the timer, that the first CFP period has elapsed, the AP determines whether there are accumulated packets in the queue of the AP (S4).

When it is determined that there are the accumulated packets in an arbitrary queue, the AP determines, based on the relevant count value of the timer, whether there exists the second CFP period in the QCFP period except for the first CFP period (S5). The presence of the second CFP period can be recognized from the fact that the second CFP period is equal to a CFP period obtained by subtracting the first CFP period from the fixed QCFP.

When it is determined, based on the count value of the timer, that the second CFP of the QCFP period exists, the AP formulates the history of the accumulated packets (S6) and calculates the number of packets that are transmittable in the second CFP period (S7). The history of the accumulated packets may leave information about the accumulated packets so that the AP discovers a terminal to which packets may be abnormally excessively transmitted to reflect it to the packet filter policy or exclude a destination terminal for the packet from QoS guarantee terminals, or the history may provide information for discovering an origination of the relevant packet.

Further, the number of packets that are transmittable in the second CFP period depends on the second CFP period and the number of queues where packets have been accumulated. After an overall number of packets that are transmittable during the second CFP period is calculated, the AP determines whether a packet filter policy applied to transmission of the relevant packets is established prior to transmitting the accumulated packets (S8).

With a packet filter, the AP may send a disassociation request frame to the terminal if the number N of the accumulated packets that are not sent in the relevant period is larger than a time value defined by the user, or may discard packets to be sent to the relevant terminal by referring to destination addresses of MAC headers of the packets, during a time FILTER(t) defined by the user. The use of the packet filter depends on user's selection.

When the packet filter policy applied to the packet transmission is established, the AP performs filtering on the accumulated packets according to the established packet filter policy (S9). The AP also transmits remaining packets, after the packet filtering is performed, to the relevant terminal during the second CFP period, *i. e.,* until the CF-END signal is generated (S10).

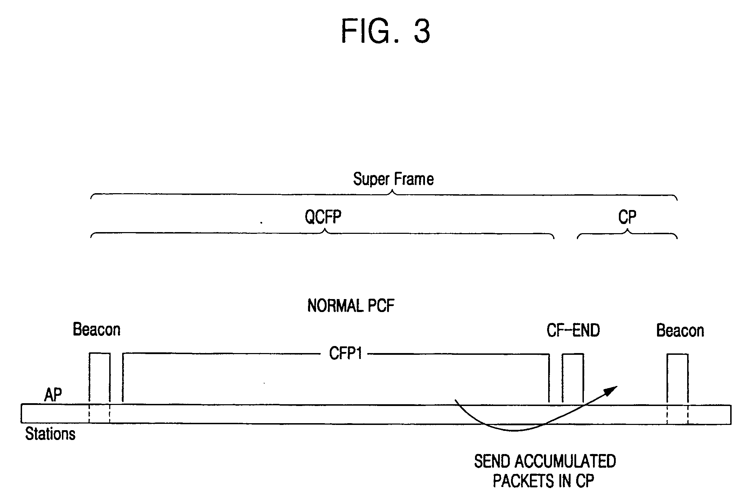

FIG. 3 illustrates a superframe scheduled in a PCF mechanism according to another embodiment of the present invention.

Referring to FIG. 3, the superframe scheduled according to another embodiment of the present invention is composed of a first period in which only a terminal receiving a poll from an access point (AP) is allowed to access a medium without contention, the AP providing the poll to arbitrary terminals, and a second period in which a terminal is allowed to access the medium with contention.

The superframe is scheduled so that, in the first period of the superframe, the AP firstly transmits packets stored in a queue of the AP to the arbitrary terminals, and secondly transmits packets that are not transmitted in time and are accumulated in the queue. At this time, the superframe has a frame period extending from one beacon to a next beacon.

For convenience, hereinafter, the first period is called a QoS contention-free period (QCFP) and the second period is called a contention period (CP).

The QCFP indicating the first period is a name obtained by combining Q indicating the QoS guarantee and CFP indicating the CFP period in the superframe except for the CP period.

Thus, the QCFP period is a period from a point in time at which one beacon signal is generated to a point in time at which a contention-free end signal (CF-END) is generated. The CP period is a period from the point in time at which the contention-free end signal (CF-END) is generated to a point in time at which a next beacon signal is generated.

The QCFP is a CFP period in which packets stored in the queue of the AP are transmitted to a relevant terminal without contention. The second CP is a CP period in the overall superframe period except for the QCFP period, and is a CP period in which packets accumulated in the queue of the AP are transmitted to the relevant terminal with contention.

That is, the superframe is scheduled such that, during the QCFP, the packets stored in the queue, which is assigned to each terminal, are transmitted to the relevant terminal in a VoDn mode and, during the CP, the accumulated packets in the queue assigned to an arbitrary terminal are transmitted to the relevant terminal when there are the accumulated packets in the queue during a certain time.

Thus, the scheduling of one superframe is made so that, in the first CFP, the packets are sequentially transmitted without contention to terminals which the AP desires to poll and, during the CP in the overall superframe period remaining except for the QCFP, the accumulated packets in the queue of the AP which are not transmitted in time to the relevant terminals in the QCFP are transmitted.

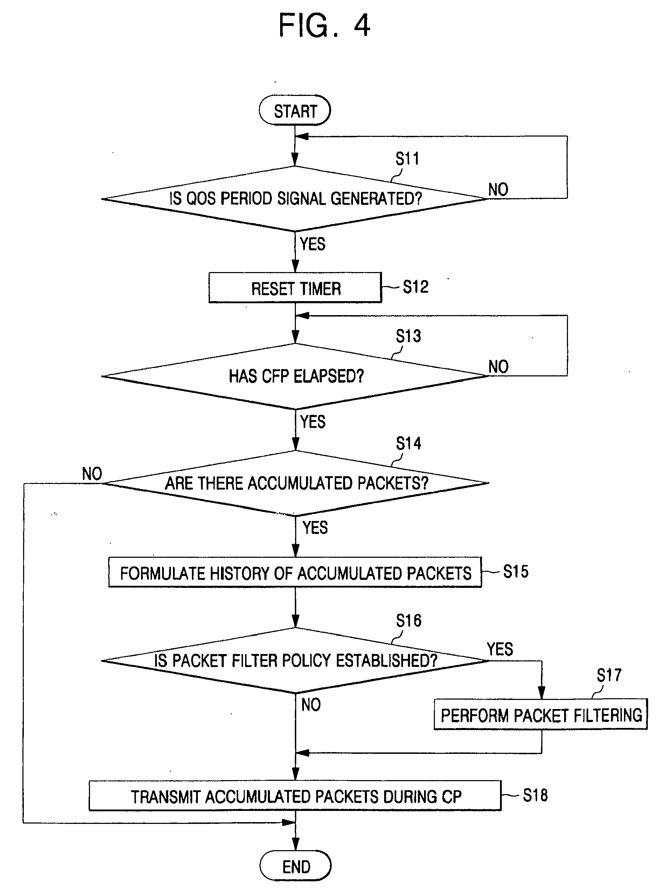

FIG. 4 is a flow diagram illustrating a method for scheduling in the PCF mechanism shown in FIG. 3.

The AP generates a beacon signal at each beacon period, and transmits the generated beacon signal to respective terminals in the WLAN area of the AP. Accordingly, a task of scheduling the superframe in the AP begins with checking a point in time at which the beacon signal is generated. At this time, the beacon signal is called a QoS period signal since the beacon signal indicates a period signal needed to perform the QoS service.

Referring to FIG. 4, first, the AP determines whether the QoS period signal (i.e., beacon) is generated (S11). When it is determined that the QoS period signal (i.e., beacon) is generated, the AP resets a timer which begins to count (S12). Periodic generation of the beacon signal in the AP is realized by a counter embedded in the AP for counting the period of the beacon signal. For this reason, the timer mentioned herein is a timer counting the period of the beacon signal.

After the timer begins to count, the AP reads a count value of the timer to determine whether the CFP period has elapsed (S13).

When it is determined, based on the count value of the timer, that the CFP period has not elapsed, the AP may determine that the CFP period is in progress. In the VoDn mode during the CFP period, the AP transmits packets stored in each queue, which is assigned to terminals which the AP desires to poll. It is normal that, in the VoDn mode during the CFP period, all of the packets in the queue assigned to the relevant terminal are transmitted. However, if the packets stored in arbitrary queue are more than can be transmitted to the relevant terminal, all of the packets stored in the queue in the VoDn mode during the CFP period may be not transmitted to the relevant terminal, but may be accumulated in the queue instead.

Accordingly, when it is determined, based on the count value of the timer, that the CFP period has elapsed, the AP determines whether there are accumulated packets in the queue of the AP (S14).

When it is determined that there are accumulated packets in arbitrary queue, the AP formulates a history of the accumulated packets (S 15). The history of the accumulated packets may leave information about the accumulated packets so that the AP discovers a terminal to which packets may be abnormally excessively transmitted to reflect it to the packet filter policy or to exclude a destination terminal of the packet from QoS guarantee terminals, or the history may provide information for discovering the origination of the relevant packet.

When the history of the accumulated packets is formulated, the AP determine whether a packet filter policy applied to transmission of the relevant packets is established prior to transmitting the accumulated packets (S16).

With a packet filter, the AP may send a disassociation request frame to the relevant terminal if the number N of the accumulated packets that are not sent in the relevant period is larger than a time value defined by the user, or may discard packets to be sent to the relevant terminal by referring to a destination address of a MAC header, during a time FILTER(t) defined by the user. The use of packet filter depends on user's selection.

When the packet filter policy applied to the packet transmission is established, the AP performs filtering on the accumulated packets according to the established packet filter policy (S 17). The AP also transmits remaining packets, *(i.e.,* the accumulated packets), after the packet filtering is performed, to the relevant terminal during the CP period, *(i.e.,* in a period from a time point at which the CF-END signal is generated to a time point at which the QoS period signal (i.e., beacon) is generated) (S18).

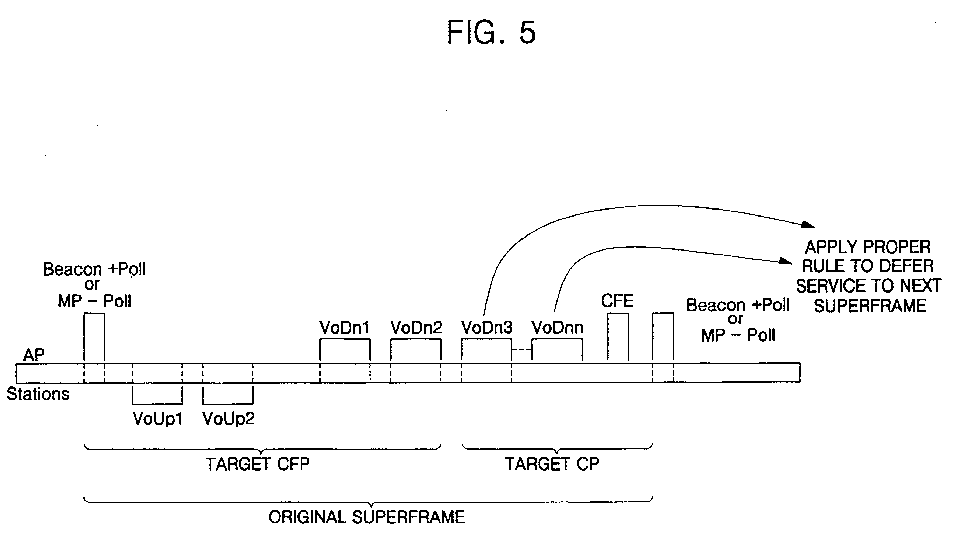

FIG. 5 illustrates a superframe scheduled in an MPDCF mechanism according to yet another embodiment of the present invention.

Referring to FIG. 5, a superframe scheduled according to another embodiment of the present invention is composed of a first period in which only a terminal receiving a poll from an AP is allowed to access a medium without contention, the AP providing the poll to an arbitrary terminal, and a second period in which a terminal is allowed to access the medium with contention.

At this time, the superframe is scheduled such that, in the first period of the superframe, after a VoUp mode is performed in which packets are transmitted from the arbitrary terminals to the AP, a maximum time in which packets stored in the queue of the AP are transmittable to the relevant terminal is calculated, the number of packets transmittable in that time is calculated, the calculated number of packets is transmitted, and transmission of packets that are not transmitted in time is deferred to a next superframe. The superframe has a frame period from one beacon to a next beacon.

For convenience, hereinafter, the first period is called a target contention-free period (CFP) and the second period is called a target contention period (CP).

After transmitting beacons or multi-polls that determine the period of the superframe in the multi-poll mechanism, the AP operates the timer to measure the VoUP period during the target contention-free period (CFP). Accordingly, the AP will be able to calculate a maximum VoDn period, from a time point at which the VoUP period is ended to a time point at which the target contention-free period (CFP) is ended, by comparing the timer value measured when the VoUP period is ended to a time value of a preset target contention-free period (CFP).

The AP calculates the maximum number of packets transmittable in the MPDCF terminal based on the calculated value of the maximum VoDn period in the target contention-free period (CFP). If the number of packets ready to transmit during the relevant superframe are larger than the maximum number of packets, the AP applies several scheduling policies and stores specification of the relevant packets as the history.

By thus applying a weight to each queue based on fair distribution, it is possible to prescribe the proper number of packets transmittable in one superframe and, by storing the specification, it is possible to discover a terminal to which packets may be transmitted abnormally and excessively and exclude the terminal from QoS guarantee terminals, or to provide data for discovering the origination of the relevant packet.

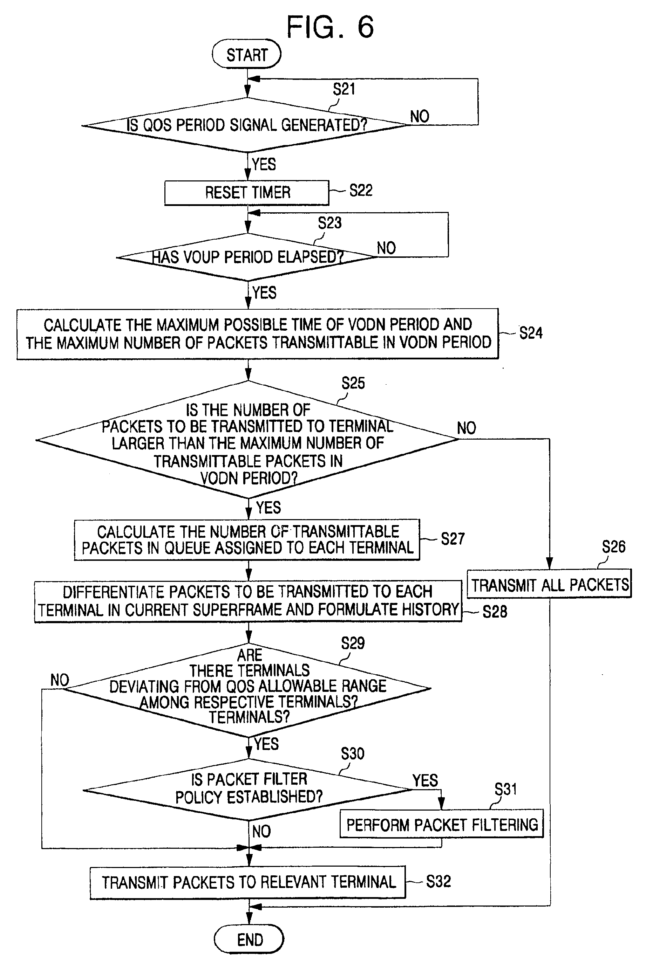

FIG. 6 is a flow diagram illustrating a method for scheduling in the MPDCF mechanism as shown in FIG. 5.

The AP generates a beacon signal at each beacon period, and transmits the generated beacon signal to respective terminals in the WLAN area of the AP. At this time, the AP will transmit the beacon signal or a multi-polling message at each beacon period in the MPDCF. Accordingly, a task of scheduling the superframe in the AP begins with checking a point in time at which the beacon signal or the multi-poll is generated. At this time, the beacon signal or the multi-poll is called a QoS period signal since it indicates a period signal needed to perform the QoS service.

Referring to FIG. 6, the AP determines whether the QoS period signal (i.e., beacon or multi-poll) is generated (S21). When it is determined that the QoS period signal (i.e., beacon or multi-poll) is generated, the AP resets a timer to begin a count (S22). Periodic generation of the beacon signal or the multi-poll in the AP is realized by a counter embedded in the AP for counting the period of the beacon signal or the multi-poll. For this reason, the timer mentioned herein is a timer counting the period of the beacon signal or the multi-poll.

The AP determines, based on the count value read from the timer, whether a period (VoUp) in which the packets are transmitted from the terminal to the AP has elapsed (S23). The period (VoUp) in which packets are transmitted from the terminal to the AP may be recognized from the count value of the timer.

When it is determined, based on the count value of the timer, that the period (VoUp) in which packets are transmitted from the terminal to the AP has elapsed after the timer begins to count, the maximum possible time (T4) of the VoDn period and the maximum number N(APmax) of packets transmittable in the VoDn period are calculated (S24).

As shown in Equation 1, the maximum possible time (T4) of the VoDn period is obtained by subtracting a time point at which the period (VoUp) in which packets are transmitted from the terminal to the AP has elapsed from a target CFP period, wherein the target CFP period is obtained by subtracting the target CP period from a period of the overall superframe.

Further, the maximum number N(APmax) of packets that are transmittable in the VoDn period means the number of the packets that are transmittable in the maximum possible time (T4) of the VoDn period.

<Equation 1>

$$T4 = T1 - T2 - T3 - \alpha$$

where T1 indicates the period of the superframe, T2 indicates a minimum time operating as the target CP period, T3 indicates a measured time of the VoDn period, T4 indicates a maximum possible time of the VoDn period, and $\alpha$ indicates

an allowable error.

The AP determines whether the number N(APp) of the packets to be transmitted to the terminal with the application of QoS is larger than the maximum number of packets N(APmax) that the AP can transmit through performance of a down mode (S25).

If it is determined that the number N(APp) of the packets to be transmitted to the terminal with the application of QoS is less than the maximum number of the packets N(APmax) that the AP can transmit through the performance of the down mode, all packets stored in the queue of the AP are transmitted (S26).

On the other hand, if the number N(APp) of the packets to be transmitted to the terminal with the application of QoS exceeds the maximum number of packets N(APmax) that the AP can transmit through the performance of the down mode, the AP calculates the number of transmittable packets in the queue assigned to each terminal (S27).

The number of the packets may be obtained by dividing the maximum number N(APmax) of packets that the AP can transmit through the performance of the down mode by the number N(APp) of packets to be transmitted to the terminal with the application of QoS, and then by considering an allowable error, as indicated in Equation 2.

<Equation 2>

$$N(Qn) = (N(APmax) / N(APp)) + \beta$$

where N(Qn) indicates the number of packets to be transmitted to the terminal, N(APmax) indicates the maximum number of packets that are transmittable in the VoDn, N(APp) indicates the number of packets to be transmitted to the terminal with the application of QoS, and $\beta$ indicates the allowable error.

When the number of transmittable packets in the queue assigned to each terminal is calculated, the AP differentiates packets to be transmitted to each terminal in the current superframe depending on the number, and formulates the history of the packets for each terminal (S28).

The history of the packets for each terminal may leave information about the packets stored in the queue of the AP so that the AP discovers a terminal to which packets may be abnormally excessively sent to reflect it to the packet filter policy or to exclude the destination terminal for the relevant packets from QoS guarantee terminals, or the history may provide information for discovering a terminal from which the relevant packets are originated.

The AP then determines whether there are terminals deviating from a QoS allowable range among the respective terminals (S29). The deviation from the QoS allowable range means that packets stored in the queue assigned to arbitrary terminal exceeds the number of transmittable packets in the queue assigned to each terminal.

When it is determined that there are no terminals deviating from the QoS allowable range, the AP transmits the packets to the relevant terminal during the CFP period by the number of the transmittable packets in the queue assigned to each terminal (S32).

On the other hand, when it is determined that there is a terminal deviating from the QoS allowable range, the AP determines whether the packet filter policy applied to the transmission of the relevant packets is established, prior to transmitting the packets stored in the queue to the relevant terminal (S30).

If the packet filter policy applied to the packet transmission is established, the AP performs filtering on the packets stored in the queue, which is assigned to the terminal deviating from the QoS allowable range, depending on the established packet filter policy (S31).

With a packet filter, the AP will send a disassociation request frame to the relevant terminal or will discard packets to be sent to the relevant terminal by referring to destination addresses of MAC headers of the packets if the number of accumulated packets N that are not sent in the relevant period is larger than a value of time defined by the user, during a time FIL TER(t) defined by the user. The use of the packet filter depends on the user's selection.

Based on the filtering result, the AP transmits the packets stored in the queue assigned to each terminal to the relevant terminal during the target CFP period (S32) and defers transmission of packets that are not transmitted to the relevant terminal during the target CFP period to a next superframe.

According to an embodiment of the present invention, in the WLAN system using the PCF mechanism that guarantees the QoS, when there is a request for transmission of an excessively great number of packets to an arbitrary terminal, the AP performs normal polling in the first CFP period and then transmits the packets accumulated in the queue to the relevant terminal during the second CFP period in the overall QCFP period assigned to process the accumulated packets as long as the CFP period is allowed, thus reducing the amount of packets accumulated in the queue.

Further, according to another embodiment of the present invention, normal packets stored in the queue of the AP are transmitted to the relevant terminal during the CFP period, and a transmission chance in the CP period is provided for packets that are accumulated in the queue of the AP during a certain period of time, thus processing burst packets or Ethernet buffered packets from the AP to the terminal. Further, information about the accumulated packets is left so that a terminal to which the packet may be abnormally excessively sent is discovered and excluded from the QoS guarantee terminals, or information is provided for discovering the origination of the relevant packet, thus protecting an overall QoS guarantee system.

Further, according to yet another embodiment of the present invention, the AP sends beacons or multi-polls that determine the period of the superframe in the Multi-Poll mechanism, and then operates the timer to measure the VoUP period. The AP will obtain a value of the maximum VoDn period based on the measured timer value when the VoUP period is ended. Accordingly, the AP calculates the maximum number of packets that are transmittable to the MPDCF terminal based on the value of the maximum VoDn period and, if the number of the packets ready for transmission during the relevant superframe is larger than the maximum number of packets, establishes several scheduling policies so that the transmittable packets are transmitted during the relevant superframe period and excessive packets are transmitted during a next superframe.

That is, by applying the weight to each queue based on fair distribution, it is possible to prescribe the proper number of packets that are transmittable in one superframe, and by storing its specification, to discover a terminal to which packets may be transmitted abnormally excessively and exclude the terminal from QoS guarantee terminals. Further, by providing data for discovering the origination of the relevant packet, it is possible to protect the overall QoS guarantee system.

Thus, with the present invention, it is possible to supplement packets that are received from an Ethernet unable to guarantee QoS, through proper scheduling upon communication with another subnet, and to recognize information about abnormally operating terminals to guarantee overall QoS.

Although exemplary embodiments of the present invention have been disclosed, it will be apparent that various alternations and changes may be made to the present invention without departing from the spirit and scope of the present invention. Therefore, the present invention should not be limited to the illustrated embodiments and the accompanying drawings.

**Claims**

1. A method for processing packets in a polling-based wireless local area network system, comprising the steps of:

   scheduling a superframe which includes a first period in which only a terminal receiving a polling message from an access point is allowed to access a medium without contention, the access point transmitting the polling message to arbitrary terminals, and which includes a second period in which a terminal is allowed to access the medium with contention;
   transmitting, by means of the access point, during a first sub-period in the first period of the superframe, packets stored in a queue of the access point to the arbitrary terminals; and
   transmitting, during a second sub-period of the first period, packets that are not transmitted during the first sub-period in the first period but are accumulated in the queue of the access point.

2. The method according to claim 1, further comprising the steps of:

   storing a history of the packets accumulated in the queue of the access point; and
   performing packet filtering using the history.

3. The method according to claim 2, wherein the packet filtering comprises sending a disassociation request frame to the relevant terminal when the number of the accumulated packets that are not sent in the relevant period during a set period of time is larger than the set period of time.

4. The method according to claim 2, wherein the packet filtering comprises referring to a destination address of a medium access control (MAC) header of the accumulated packets in the queue to discard the packets that will be sent to the relevant terminal.

5. The method according to claim 1, wherein the first sub-period is a period of time in the first period of the superframe in which the access point transmits the polling message to each terminal and the terminal receiving the polling message transmits data to the access point, thereby completing one polling period, and wherein the second sub-period comprises a portion of the first period of the superframe excluding the first sub-period.

6. A method for scheduling a superframe in a polling-based wireless local area network system, comprising the steps of:

providing the superframe with a first period in which only a terminal receiving a polling message from an access point is allowed to access a medium without contention, the access point transmitting the polling message to arbitrary terminals;

providing the superframe with a second period in which a terminal is allowed to access the medium with contention; and

scheduling the superframe in such a manner that the access point firstly transmits packets stored in a queue of the access point to the arbitrary terminals during the first period of the superframe, and the access point secondly transmits packets that are not transmitted in time but are accumulated in the queue.

7. The method according to claim 6, wherein the first period includes:

a first sub-period, in the first period of the superframe, in which the access point transmits the polling message to each terminal, and the terminal receiving the polling message transmits data to the access point to thereby complete one polling period; and

a second sub-period, comprising a portion of the first period of the superframe excluding the first sub-period, the access point secondly transmitting, during the second sub-period, the packets that are not transmitted but are accumulated in the queue.

8. A method for processing packets in a polling-based wireless local area network system, comprising the steps of:

scheduling a superframe which includes a first period in which only a terminal receiving a polling message from an access point is allowed to access a medium without contention, the access point transmitting the polling message to arbitrary terminals, and which includes a second period in which a terminal is allowed to access the medium with contention;

transmitting, by means of the access point, during the first period of the superframe, packets stored in a queue of the access point to the arbitrary terminals; and

transmitting, during the second period, packets that are not transmitted in time during the first period but are accumulated in the queue of the access point.

9. The method according to claim 8, further comprising:

storing a history of the packets accumulated in the queue of the access point; and
performing packet filtering using the history.

10. The method according to claim 9, wherein the packet filtering comprises sending a disassociation request frame to the relevant terminal when the number of the accumulated packets that are not sent in the relevant period during a set period of time is larger than the set period of time.

11. The method according to claim 9, wherein the packet filtering comprises referring to a destination address of a medium access control (MAC) header of the accumulated packets in the queue to discard the packets that will be sent to the relevant terminal.

12. A method for scheduling a superframe in a polling-based wireless local area network system, comprising the steps of:

providing the superframe with a first period in which only a terminal receiving a polling message from an access point is allowed to access a medium without contention, the access point transmitting the polling message to arbitrary terminals;

providing the superframe with a second period in which a terminal is allowed to access the medium with contention; and

scheduling the superframe in such a manner that the access point firstly transmits packets stored in a queue of the access point to the arbitrary terminals during the first period of the superframe, and the access point secondly transmits, during the second period of the superframe, packets that are not transmitted in time during the first period of the superframe but are accumulated in the queue.

13. A method for processing packets in a polling-based wireless local area network system, comprising the steps of:

scheduling a superframe which includes a first period in which only a terminal receiving a polling message from an access point is allowed to access a medium without contention, the access point transmitting the polling message to arbitrary terminals, and which includes a second period in which a terminal is allowed to access the medium with contention;

after a mode is performed in which packets are transmitted from the arbitrary terminals to the access point in the first period of the superframe, calculating a maximum time in which packets stored in a queue of the access point are transmittable to the relevant terminal;

calculating the number of packets transmittable in the maximum time in which the packets stored in the queue of the access point are transmittable to the relevant terminal; and

transmitting the calculated number of packets during the first period, and deferring to a next superframe transmission of packets that are not transmitted in time.

**14.** The method according to claim 13, further comprising the steps of:

storing a history of the packets accumulated in the queue of the access point; and
performing packet filtering using the history.

**15.** The method according to claim 14, wherein the packet filtering comprises sending a disassociation request frame to the relevant terminal when the number of the accumulated packets that are not sent in the relevant period during a set period of time is larger than the set period of time.

**16.** The method according to claim 14, wherein the packet filtering comprises referring to a destination address of a medium access control (MAC) header of the accumulated packets in the queue to discard the packets that will be sent to the relevant terminal.

**17.** The method according to claim 13, wherein the maximum time T4 in which the packets stored in the queue of the access point are transmitted to the relevant terminal is calculated by:

$$T4 = T1 - T2 - T3 - \alpha ,$$

where T1 indicates a period of the superframe, T2 indicates a minimum time operating as a first contention period, T3 indicates a measured time of a VoDn period during which packets are transmitted by the access point to the relevant terminal, and $\alpha$ indicates an allowable error.

**18.** The method according to claim 13, wherein the number of packets N(Qn) that are transmittable in the maximum time T4 is calculated by:

$$N(Qn) = (N(APmax) / N(APp)) + \beta,$$

where N(APmax) indicates the maximum number of packets that are transmittable in a VoDn period during which packets are transmitted by the access point to the relevant terminal, N(APp) indicates the number of packets to be transmitted to the terminal with the application of quality of service, and $\beta$ indicates an allowable error.

**19.** A method for scheduling a superframe in a polling-based wireless local area network system, comprising the steps of:

providing the superframe with a first period in which only a terminal receiving a polling message from an access point is allowed to access a medium without contention, the access point transmitting the polling message to arbitrary terminals;

providing the superframe with a second period in which a terminal is allowed to access the medium with contention; and

scheduling the superframe in such a manner that, after a mode wherein packets are transmitted from the arbitrary terminals to the access point is performed, a maximum time in which packets stored in a queue of the access point are transmittable to a relevant terminal is calculated, the number of packets transmittable in the maximum time in which the packets stored in the queue of the access point are transmittable to the relevant terminal is calculated, the calculated number of packets are transmitted during the first period, and transmission of packets that are not transmitted in time is deferred to a next superframe.

# FIG. 1

Super Frame

QCFP

CP

PERIOD IN WHICH ACCUMULATED PACKETS
ARE SENT WHEN THERE ARE
REMAINING QCFP

NORMAL PCF

CFP1

CFP2

CF-END

Beacon

Beacon

AP

Stations

EP 1 659 737 A2

# FIG. 2

START

S1 — IS QOS PERIOD SIGNAL GENERATED? — NO

YES

RESET TIMER — S2

S3 — HAS FIRST CFP ELAPSED?

S4 — ARE THERE ACCUMULATED PACKETS? — NO

YES

S5 — IS THERE SECOND CFP? — NO

YES

FORMULATE HISTORY OF ACCUMULATED PACKETS — S6

CALCULATE THE NUMBER OF PACKETS THAT ARE TRANSMITTABLE IN SECOND CFP PERIOD — S7

S8 — IS PACKET FILTER POLICY ESTABLISHED? — YES

NO

PERFORM PACKET FILTERING — S9

TRANSMIT ACCUMULATED PACKETS UNTIL SECOND CFP IS ENDED — S10

END

# FIG. 3

EP 1 659 737 A2

Super Frame

QCFP

CP

NORMAL PCF

Beacon

CF-END

Beacon

CFP1

AP

Stations

SEND ACCUMULATED
PACKETS IN CP

# FIG. 4

```
                    ( START )
                        │
                        ▼
                       S11
        ┌───────────────────────────────────┐         NO
        ◄  IS QOS PERIOD SIGNAL GENERATED?   ►──────────┐
        └───────────────────────────────────┘          │
                        │                               │
                       YES                              │
                        ▼                               │
              ┌──────────────────┐                      │
              │   RESET TIMER    │── S12                │
              └──────────────────┘                      │
                        │                               │
                        ▼                               │
                       S13                              │
        ┌───────────────────────────────────┐   NO     │
        ◄          HAS CFP ELAPSED?          ►─────────┤
        └───────────────────────────────────┘          │
                        │                               │
                       YES                              │
                        ▼                               │
        NO             S14                              │
     ┌──────◄  ARE THERE ACCUMULATED PACKETS?  ►        │
     │          └──────────────────────────┘           │
     │                  │                               │
     │                 YES                              │
     │                  ▼                               │
     │   ┌──────────────────────────────────────┐       │
     │   │ FORMULATE HISTORY OF ACCUMULATED PACKETS │── S15
     │   └──────────────────────────────────────┘       │
     │                  │                               │
     │                  ▼                               │
     │                 S16                              │
     │   ┌──────────────────────────────────────┐  YES  │
     │   ◄  IS PACKET FILTER POLICY ESTABLISHED? ►───┐  │
     │   └──────────────────────────────────────┘    │  │
     │                  │                            S17 │
     │                 NO           ┌─────────────────┐ │
     │                  │           │ PERFORM PACKET FILTERING │
     │                  │           └─────────────────┘ │
     │                  │◄──────────────────┘           │
     │                  ▼                               │
     │   ┌──────────────────────────────────────┐       │
     │   │ TRANSMIT ACCUMULATED PACKETS DURING CP │── S18
     │   └──────────────────────────────────────┘       │
     │                  │                               │
     └──────────────────┤                               │
                        ▼                               │
                    ( END )                             │
```

# FIG. 5

EP 1 659 737 A2

# FIG. 6

START

S21
IS QOS PERIOD SIGNAL GENERATED? — NO

↓ YES

RESET TIMER — S22

S23
HAS VOUP PERIOD ELAPSED? — NO

↓ YES

CALCULATE THE MAXIMUM POSSIBLE TIME OF VODN PERIOD AND THE MAXIMUM NUMBER OF PACKETS TRANSMITTABLE IN VODN PERIOD — S24

S25
IS THE NUMBER OF PACKETS TO BE TRANSMITTED TO TERMINAL LARGER THAN THE MAXIMUM NUMBER OF TRANSMITTABLE PACKETS IN VODN PERIOD? — NO

↓ YES

CALCULATE THE NUMBER OF TRANSMITTABLE PACKETS IN QUEUE ASSIGNED TO EACH TERMINAL — S27

TRANSMIT ALL PACKETS — S26

DIFFERENTIATE PACKETS TO BE TRANSMITTED TO EACH TERMINAL IN CURRENT SUPERFRAME AND FORMULATE HISTORY — S28

S29
ARE THERE TERMINALS DEVIATING FROM QOS ALLOWABLE RANGE AMONG RESPECTIVE TERMINALS? TERMINALS? — NO

↓ YES

S30
IS PACKET FILTER POLICY ESTABLISHED? — YES

PERFORM PACKET FILTERING — S31

↓ NO

TRANSMIT PACKETS TO RELEVANT TERMINAL — S32

END